# EUROPÄISCHE PATENTSCHRIFT

(11) **EP 0 450 252 B1**
(45) Veröffentlichungstag und Bekanntmachung des Hinweises auf die Patenterteilung: **25.05.1994**
(21) Anmeldenummer: 90710009.3
(22) Anmeldetag: 31.03.1990
(51) Int. Cl.: F16F 15/04, B63H 21/30, F16M 7/00

(54) **Lagerung mit einer Brennkraftmaschine und einem Maschinenfundament**
Combustion engine support comprising an internal combustion engine and a foundation
Support comprenant un moteur à combustion et une fondation

(43) Veröffentlichungstag der Anmeldung: 09.10.1991
(73) Patentinhaber: MAN B & W Diesel Aktiengesellschaft, 86135 Augsburg (DE)
(72) Erfinder: Seidemann, Heinz, D-8904 Friedberg (DE)

(56) Entgegenhaltungen:
- DE-B- 1 135 246
- DE-U- 7 226 826
- US-A- 2 058 076
- US-A- 2 661 942
- US-A- 2 693 925
- US-A- 3 066 905
- US-A- 4 778 421
- SCHIP EN WERF. vol. 35, no. 23, 15 November 1968, ROTTERDAM NL Seiten 526 -527; GÖTZ ALBER: "GEHEEL METALEN DEMPERS VOOR SCHOK- EN TRILLINGSISOLATIE AANBOORD VAN SCHEPEN"
- TECHNISCHE RUNDSCHAU. vol. 80, no. 9, 26 Februar 1988, BERN CH Seiten 40 - 45;F. KUNZ, H. MEIER: "SCHWINGUNGSTECHNIK IM MASCHINENBAU"

## Beschreibung

Die Erfindung betrifft eine Lagerung mit einer Brennkraftmaschine und einem Maschinenfundament, bei der zwischen der Brennkraftmaschine und dem Maschinenfundament Federelemente angeordnet sind.

Bei Brennkraftmaschinen, insbesondere bei größeren Dieselmotoren für Schiffsantriebe oder stationäre Anlagen, wie z.B. Kraftwerke, treten im Betrieb durch Kolbenseitenkräfte Schwingungen als Folge von pulsierenden Reaktionskräften auf. Die Frequenzen der Schwingungen sind abhängig von der Zylinderzahl und Drehzahl des Motors. Zwei Arten von Schwingungen treten im besonderen hervor. Die eine ist die sogenannte H-Schwingung, d.h. eine Schwingung um eine Längsachse der Brennkraftmaschine, und die andere eine X-Schwingung, d.h. eine Schwingung um eine vertikale Achse der Brennkraftmaschine. Daraus resultiert eine Gesamtschwingung, die dem aus der Brennkraftmaschine und dem Maschinenfundament, auf dem die Brennkraftmaschine gelagert ist, zusammengesetzten schwingungsfähigen System aufgezwungen wird.

Jedes derartige Schwingungssystem weist Eigenfrequenzen auf, die von den Massen und der Elastizität des Werkstoffs der Brennkraftmaschine und des Maschinenfundaments abhängen. Wenn der Fall eintritt, daß eine Eigenfrequenz mit der aufgezwungenen Schwingung nahezu oder sogar ganz zusammenfällt, so kommt es zu einer resonanzartigen Überhöhung der Schwingung an der Brennkraftmaschine und der bei einer starren Fundamentierung ins Maschinenfundament eingeleiteten periodischen Kräfte, die zu einer hohen Materialbeanspruchung führt. Ist beispielsweise die Brennkraftmaschine in ein Schiff eingebaut, so kann hierdurch der gesamte Schiffskörper in störende Schwingungen geraten. Andererseits hat eine starre Lagerung der Brennkraftmaschine den Vorteil, daß sowohl eine einfache steife Kupplung an der Abtriebswelle, als auch ein unmittelbarer Anschluß der Ver- und Entsorgungsleitungen möglich ist.

Aus der US-A-2 693 925 ist es bekannt, eine Brennkraftmaschine zur Vermeidung der Übertragung von Körperschall mittels einer elastischen Lagerung auf dem Maschinenfundament zu befestigen. Zwischen den Füßen der Maschine und dem Maschinenfundament sind Federelemente angeordnet, d.h. die Maschine wird elastisch gelagert und schwingungstechnisch von ihrem Fundament entkoppelt. Hierdurch werden auch die oben genannten Kräfte auf das Maschinenfundament erheblich reduziert und die Gefahr des Auftretens einer Resonanz vermieden.

Bekanntlich ist die elastische Lagerung am wirkungsvollsten, wenn eine überkritische Lagerung gewählt wird, d.h. die Eigenfrequenz wesentlich unter der niedrigsten erregenden Frequenz liegt. Je weicher man die Lagerung gestaltet, d.h. je kleiner die Federkonstante ist, umso niedriger wird die Eigenfrequenz. Eine niedrige Federkonstante hat jedoch den Nachteil, daß die Eindrückung der Federelemente groß wird und große dynamische Bewegungen der Brennkraftmaschine mit sich bringt. Dies setzt voraus, daß alle Ver- und Entsorgungsleitungen der Maschine mit elastischen Verbindungsglieder ausgestattet werden müssen. Außerdem ist eine elastische Kupplung zwischen dem starr aufgestellten Getriebe und der elastisch aufgestellten Brennkraftmaschine erforderlich.

Aufgabe der Erfindung ist es, einerseits Resonanzerscheinungen des die Brennkraftmaschine und das Maschinenfundament umfassende Schwingungssystems zu vermeiden, aber andererseits starre Anschlüsse der Ver- und Entsorgungsleitungen sowie eine steife Kupplung zu ermöglichen.

Diese Aufgabe wird durch Anwendung der Merkmale des Kennzeichens des Anspruchs 1 gelöst.

Weitere Merkmale und daraus resultierende Vorteile ergeben sich aus den Unteransprüchen und der nachfolgenden Beschreibung mehrerer Ausführungsbeispiele der Neuerung anhand der Zeichnung. Es zeigt:
- Fig. 1: einen schematischen Querschnitt durch einen Schiffsrumpf mit einem Antrieb durch einen größeren Dieselmotor,
- Fig. 2: ein erstes Ausführungsbeispiel eines Federelements in einem Längsschnitt,
- Fig. 3: eine Ansicht des Federelementes nach Fig. 1 von oben und die
- Fig. 4 bis Fig. 9: weitere Ausführungsbeispiele der Federelemente jeweils in einer Seitenansicht.

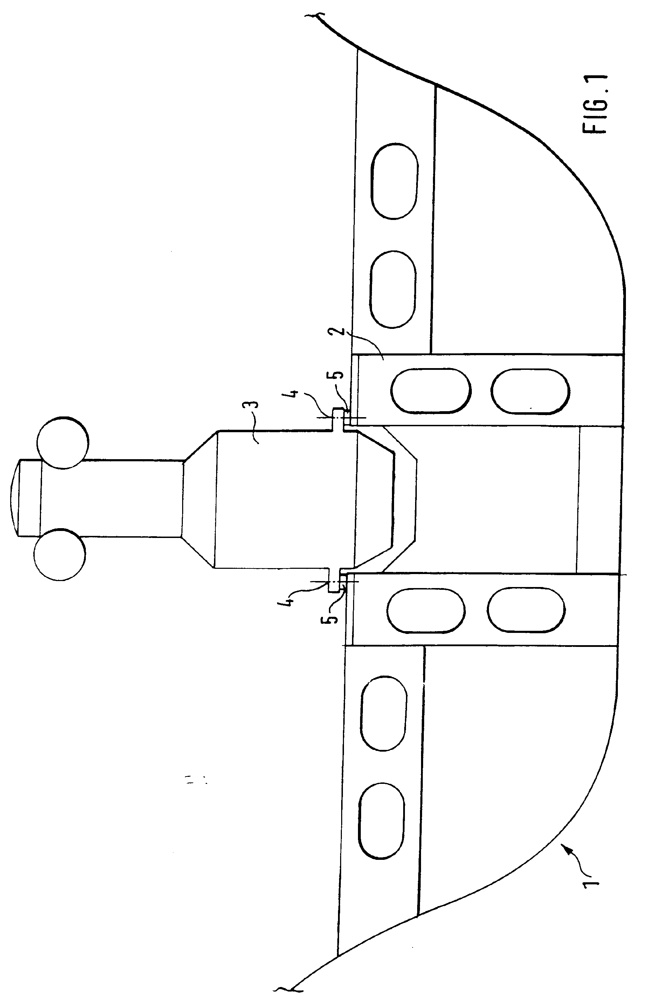

Bei dem in Fig. 1 dargestellten Ausführungsbeispiel ist in einem Schiffsrumpf 1 ein Maschinenfundament 2 eingebaut. Auf dieses Maschinenfundament 2 ist eine Brennkraftmaschine 3 mittig aufgesetzt. Die Brennkraftmaschine 3 weist an jeder Längsseite einen seitlichen Lagerflansch 4 mit mehreren Bohrungen für je eine Befestigungsschraube auf. An der Brennkraftmaschine 3 können jedoch auch anstelle durchlaufender Lagerflansche 4 mehrere Lagerpratzen für je eine Befestigungsschraube vorgesehen sein. Zwischen dem Lagerflansch 4 und dem Maschinenfundament 2 sind Federelemente 5 eingebracht, die sowohl mit dem Maschinenfundament 2 als auch mit den Lagerflanschen 4 verschraubt sind.

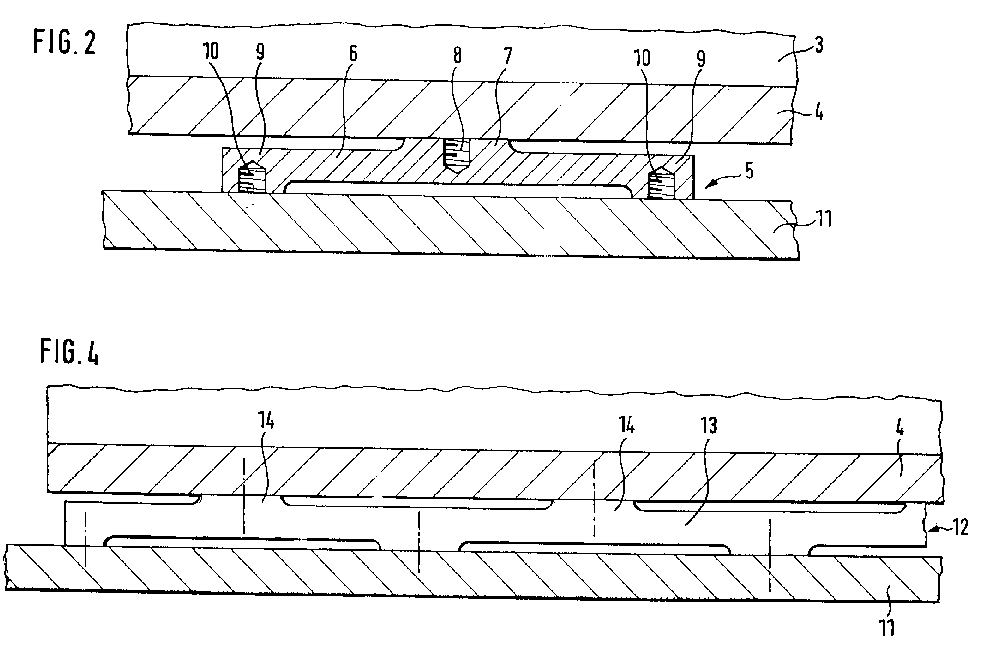

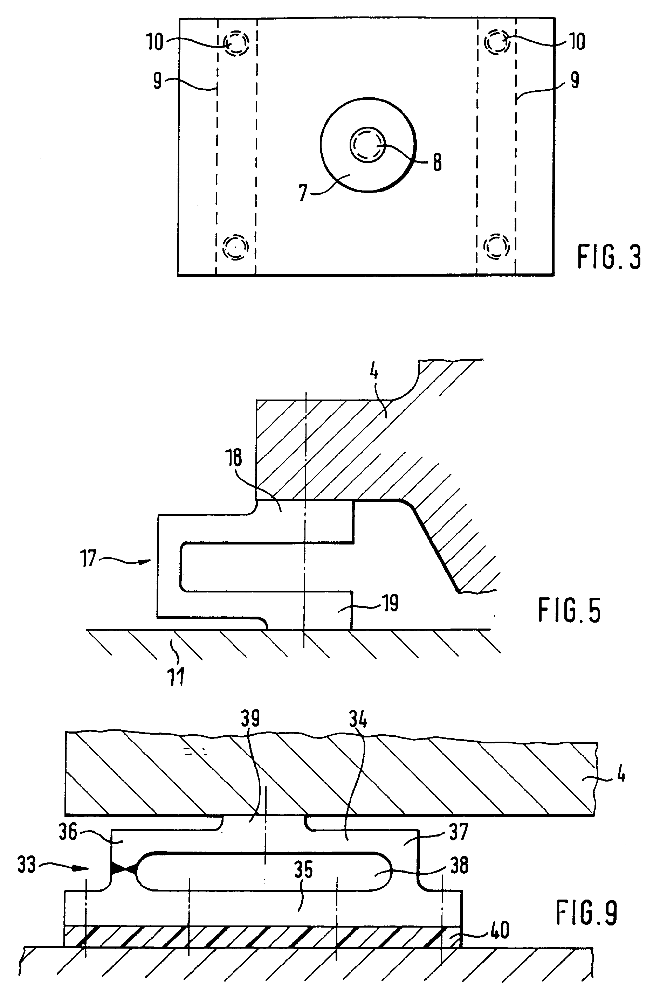

Wie Fig. 2 und 3 zeigt, umfaßt ein Federelement 5 eine Platte 6 in Rechteckform. Die Platte 6 kann jedoch auch anders, beispielsweise kreisförmig ausgebildet sein. Die Platte 6 weist auf ihrer Oberseite in der Mitte einen Ansatz 7 mit einer Gewindebohrung 8 auf, in die eine den Lagerflansch 4 durchsetzende Befestigungsschraube einschraubbar ist. Die Abstützung der Platte 6 auf dem Maschinenfundament 2 erfolgt mittels an den Rändern angeordneter Stege 9. In den Stegen 9 sind Gewindebohrungen 10 vorgesehen, in die Befestigungsschrauben einschraubbar sind, die Auflageplatten 11 des Maschinenfundaments 2 durchsetzen. Der Ansatz 7 kann auch als parallel zu den Stegen 9 verlaufender Steg ausgebildet sein.

Der Minimalwert für die Federkonstante ergibt sich aus der Forderung, daß die Verformung der Federelemente 5 in vertikaler Richtung unter der Belastung mit dem Gewicht der Brennkraftmaschine 3 nicht größer als maximal 0,3 mm/100 t Motorgewicht beträgt. Die Verformung bleibt somit klein genug, um die Ver- und Entsorgungsleitungen sowie die Kupplung der Brennkraftmaschine 3 mit dem Getriebe ohne elastische Glieder ausführen zu können. Der Maximalwert für die Federkonstante wird so bemessen, daß die Eigenfrequenz des schwingungsfähigen Gesamtsystems, deren Ermittlung auf rechnerischem oder experimentellem Wege erfolgt, um mindestens 10 % abnimmt, damit die Resonanz der auf das Maschinenfundament 2 einwirkenden periodischen Kräfte in Drehzahlbereichen liegt, die nicht mit der Brennkraftmaschine 3 gefahren oder nur kurzfristig durchfahren werden.

Durch die Federelemente 5, deren Federkonstanten auf rechnerischem Wege ermittelt werden, wird in schwingungstechnischer Hinsicht eine solche Abstimmung erreicht, daß keine Eigenfrequenz des aus der Brennkraftmaschine 3 und dem Maschinenfundament 2 zusammengesetzten schwingungsfähigen Gesamtsystems mit einer Betriebsdrehzahl der Maschine 3 zusammenfällt. Dabei wird die Federkonstante abgesehen vom Werkstoff im wesentlichen durch die Abstände des Ansatzes 7 von den Stegen 9 und der Dicke der Platte 6 bestimmt.

Durch die dargestellte Lagerung werden also einerseits die Auswirkungen einer Resonanz weitgehend unterdrückt, andererseits können durch die genügend großen Federkonstanten die Ver- und Entsorgungsleitungen gleich wie bei starrer Lagerung ausgebildet werden.

Im Falle der Lagerung eines Dieselmotors mit einem Gewicht von ca. 90 t in einem Schiff ergibt die Berechnung für das schwingende System Brennkraftmaschine 3/Maschinenfundament 2 ohne elastische Lagerung eine Eigenfrequenz von 30 Hz, die auch experimentell nachweisbar ist. Die anregende Frequenz beträgt 29,8 Hz. Eine weitere Berechnung gibt für die Federelemente 5 eine Federkonstante vor, bei der eine Eindrückung der Federelemente 5 von 0,12 mm/100 t auftritt. Hiermit wird die Eigenfrequenz des Schwingungssystems auf einen Wert zwischen 22 und 23 Hz abgesucht. Dies bedeutet für die ursprüngliche Eigenfrequenz eine Absenkung von etwa 30 %.

Fig. 4 zeigt ein Federelement 12, das eine sich über die gesamte Länge eines Lagerflansches 4 erstreckende Platte 13 umfaßt. An der Oberseite der Platte 13 sind mehrere Ansätze 14, mit Gewindebohrungen zur Aufnahme von Befestigungsschrauben vorgesehen, mit denen das Federelement 12 an dem Lagerflansch 4 angeschlossen wird. Versetzt gegenüber den Ansätzen 14 sind an der Unterseite quer zur Längsrichtung der Brennkraftmaschine 3 verlaufende Stege angeordnet, die wiederum Gewindebohrungen für Befestigungsschrauben zur Festlegung an der Auflageplatte 11 aufweisen.

Gemäß Fig. 5 weist ein Federelement 17 einen U-förmigen Querschnitt auf. Dabei sind die Enden 18 und 19 der beiden Schenkel verstärkt ausgebildet. Am Ende 18 liegt der Lagerflansch 4 und am Ende 19 die Auflageplatte 11 an. Das Federelement 17 kann über die gesamte Länge des Lagerflansches 4 durchlaufend ausgebildet sein. Es können jedoch auch mehrere kürzere Federelemente 17 unter je einer Lagerpratze der Brennkraftmaschine 3 angeordnet sein. Hier ist die Federkonstante maßgeblich durch die Länge der Schenkel bestimmt.

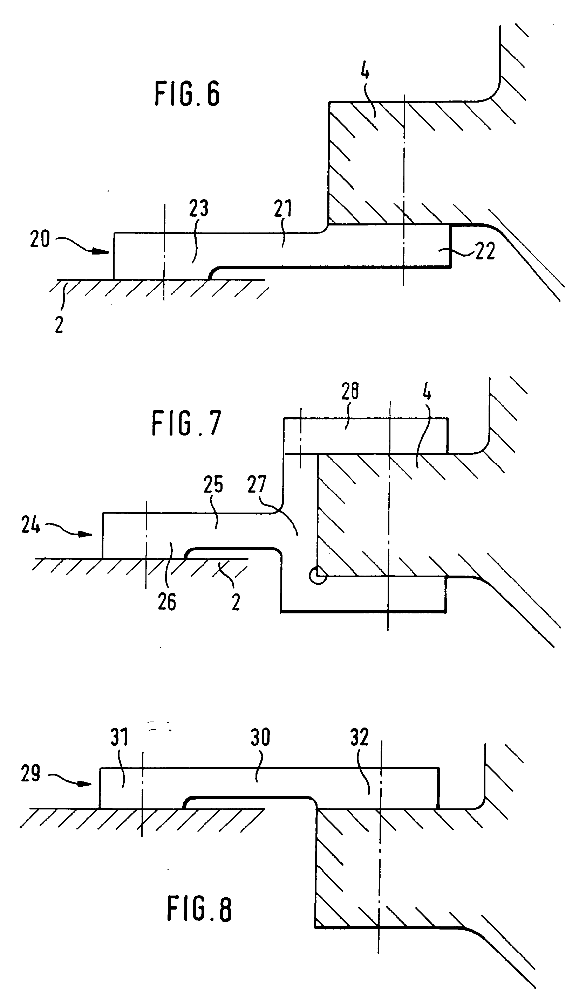

Soll das Fundament nicht direkt unter den Lagerflanschen 4 angeordnet sein, so bieten sich die Ausführungen nach den Fig. 6 bis 8 an.

Das Federelement 20 nach Figur 6 weist eine Platte 21 auf, deren Oberseite partiell mit einer Verstärkung 22 versehen ist. Diametral gegenüberliegend ist eine entsprechende Verstärkung 23 an der Unterseite vorgesehen. Das Federelement 20 wird so eingebaut, daß die Verstärkung 22 an dem Lagerflansch 4 anliegt und mit diesem verschraubt ist, während die Verstärkung 23 sich auf dem Fundament 2 abstützt und mit diesem verschraubt ist.

Nach Fig. 7 weist ein Federelement 24 einen plattenförmigen Teil 25 auf, der mit einer Verstärkung 26 versehen ist. Mit dieser Verstärkung liegt das Federelement 24 auf dem Fundament 2 auf und ist mit diesem verschraubt. An den plattenförmigen Teil 25 schließt sich ein L-förmiger Ansatz 27 an, der mit seinem einen Schenkel den Lagerflansch 4 untergreift. Auf den anderen Schenkel des L-förmigen Ansatzes 27 ist eine Leiste 28 aufgeschraubt, die gleichzeitig an der Oberseite des Lagerflansches 4 anliegt. Dieses Lagerelement 24 ist zweckmäßig über eine die Teile 27, 28 und den Lagerflansch 4 durchsetzende Schraube mit dem Motor verbunden.

Fig. 8 zeigt ein Federelement 29 für eine hängende Lagerung. Das Federelement 29 umfaßt dabei eine Platte 30, die auf der Unterseite an beiden Stirnseiten je einen Ansatz 31 bzw. 32 aufweist. Der Ansatz 31 liegt dabei am Fundament 2 an und ist mit diesem verschraubt. Ansatz 32 liegt an der Oberseite des Lagerflansches 4 an und ist ebenfalls mit diesem verschraubt.

Eine weitere Variation eines Federelementes 33 zeigt Fig. 9. Bei diesem Federelement 33 sind zwei Platten 34, 35 mittels seitlicher Ansätze 36, 37 miteinander fest verbunden und schließen einen Hohlraum 38 ein. Dabei ist die untere Platte 35 auf das Maschinenfundament 2 geschraubt und die obere Platte 34 mittels eines Ansatzes 39 mittig mit einem Lagerflansch 4 verbunden. Der Vorteil dieser Anordnung ist, daß die Fläche der Grundplatte 35 so groß bemessen werden kann, daß Gießharzunterpassung 40 möglich ist.

Die Federelemente 5, 12, 17, 20, 24, 29, 33 sind vorteilhafterweise aus Stahl oder Eisengußwerkstoffen ausgeführt.

## Patentansprüche

1. Lagerung mit einer Brennkraftmaschine (3) und einem Maschinenfundament (2), bei der zwischen der Brennkraftmaschine (3) und dem Maschinenfundament (2) Federelemente (5,12,17,20,24,29,33) angeordnet sind, dadurch gekennzeichnet, daß die Federkonstante der Federelemente (5, 12, 17, 20, 24, 29, 33) innerhalb folgender Grenzen bemessen ist:
a) die maximale Eindrückung der Federelemente (5, 12, 17, 20, 24, 29, 33) beträgt unter dem Gewicht der Brennkraftmaschine (3) höchstens 0,3 mm pro 100 t Gewicht der Brennkraftmaschine (3),
b) die Eigenfrequenz des die Brennkraftmaschine (3) und das Maschinenfundament (2) umfassende Schwingungssystems liegt nach Einbau der Federelemente (5, 12, 17, 20, 24, 29, 33) um mindestens 10 % unter der Eigenfrequenz des Schwingungssystems ohne Federelemente.

2. Lagerung nach Anspruch 1, dadurch gekennzeichnet, daß die maximale Eindrückung der Federelemente (5, 12, 17, 20, 24, 29, 33) unter dem Gewicht der Brennkraftmaschine (3) etwa 0,1 bis 0,15 mm pro 100 t Gewicht der Brennkraftmaschine (3) beträgt.

3. Lagerung nach Anspruch 1, dadurch gekennzeichnet, daß die Eigenfrequenz der die Brennkraftmaschine (3) und das Maschinenfundament (2) umfassende Schwingungssystem nach Einbau der Federelemente (5, 12, 17, 20, 24, 29, 33) um 20 bis 30 % unter der Eigenfrequenz des Schwingungssystems ohne Federelemente liegt.

4. Lagerung nach einem der vorhergehenden Ansprüche, dadurch gekennzeichnet, daß das Federelement (5) eine Platte (6) aufweist, die mittig mit einem Lagerflansch (4) der Brennkraftmaschine (3) verschraubbar ist und deren Abstützung mittels Stegen (9) an den Rändern, die auf dem Maschinenfundament (2) verschraubbar sind, erfolgt.

5. Lagerung nach einem der vorhergehenden Ansprüche, dadurch gekennzeichnet, daß die Federelemente (12) eine in Maschinenlängsrichtung durchlaufende Platte (13) aufweisen, die mit gegeneinander versetzten Ansätzen (14) zur Auflage des Lagerflansches (4) der Brennkraftmaschine (3) und Stegen (15) zur Auflage auf dem Maschinenfundament (2) versehen ist.

6. Lagerung nach einem der vorhergehenden Ansprüche, dadurch gekennzeichnet, daß die Federelemente (17) einen U-förmigen Querschnitt aufweisen und je ein Schenkel am Maschinenfundament (2) und am Lagerflansch (4) anliegt.

7. Lagerung nach einem der vorhergehenden Ansprüche, dadurch gekennzeichnet, daß die Federelemente (20, 24, 29) als seitlich ausladende Platte ausgebildet sind, die im Bereich einer Seite am Lagerflansch (4) und im Bereich der anderen Seite am Maschinenfundament (2) anliegt.

8. Lagerung nach einem der vorhergehenden Ansprüche, dadurch gekennzeichnet, daß Federelemente (33) einen Hohlraum (38) aufweisen, der von einer oberen und unteren Platte (34, 35) und seitlichen Ansätzen (36, 37) begrenzt wird.

## Claims

1. Mounting having an internal combustion engine (3) and a machine base (2) in which spring elements (5, 12, 17, 20, 24, 29, 33) are arranged between the internal combustion engine (3) and the machine base (2), characterised in that the spring constant of the spring elements (5, 12, 17, 20, 24, 29, 33) is dimensioned within the following limits:
a) the maximum compression of the spring elements (5, 12, 17, 20, 24, 29, 33) under the weight of the internal combustion engine (3) is at the most 0.3 mm per 100 t weight of the internal combustion engine (3),
b) the characteristic frequency of the oscillation system incorporating the internal combustion engine (3) and the machine base (2) after installation of the spring elements (5, 12, 17, 20, 24, 29, 33) is at least 10% below the characteristic frequency of the oscillation system without spring elements.

2. Mounting according to claim 1, characterised in that the maximum compression of the spring elements (5, 12, 17, 20, 24, 29, 33) under the weight of the internal combustion engine (3) is approximately 0.1 to 0.15 mm per 100 t weight of the internal combustion engine (3).

3. Mounting according to claim 1, characterised in that the characteristic frequency of the oscillation system incorporating the internal combustion engine (3) and the machine base (2) after installation of the spring elements (5, 12, 17, 20, 24, 29, 33) is 20 to 30% below the characteristic frequency of the oscillation system without spring elements.

4. Mounting according to one of the preceding claims, characterised in that the spring element (5) has a plate (6) which can be screwed in the centre to a bearing flange (4) of the internal combustion engine (3) and the support of which is effected by means of cross-pieces (9) on the edges which can be screwed on the machine base (2).

5. Mounting according to one of the preceding claims, characterised in that the spring elements (12) have a plate (13), extending in the longitudinal direction of the machine, which is provided with oppositely offset projections (14) for supporting the bearing flange (4) of the internal combustion engine (3), and crosspieces (15) for resting on the machine base (2).

6. Mounting according to one of the preceding claims, characterised in that the spring elements (17) have a U-shaped cross-section and one arm abuts the machine base (2) and the bearing flange respectively (4).

7. Mounting according to one of the preceding claims, characterised in that the spring elements (20, 24, 29) are constructed as a laterally load-carrying plate which in the vicinity of one side abuts the bearing flange (4) and in the vicinity of the other side abuts the machine base (2).

8. Mounting according to one of the preceding claims, characterised in that spring elements (33) have a hollow chamber (38) which is limited by an upper and a lower plate (34, 35) and lateral projections (36, 37).

## Revendications

1. Suspension comprenant un moteur à combustion interne (3) et une fondation (2) de moteur, dans lequel des éléments élastiques (5, 12, 17, 20, 24, 29, 33) sont interposés entre le moteur à combustion interne (3) et la fondation (2) de moteur, caractérisée en ce que la constante élastiques des éléments élastiques (5, 12, 17, 20, 24, 29, 33) est calculée dans les limites suivantes :
a) le débattement maximal des éléments élastiques (5, 12, 17, 20, 24, 29, 33) est au maximum, sous le poids du moteur à combustion interne (3) de 0,3 mm par 100 t de poids du moteur à combustion interne (3),
b) après la mise en place des éléments élastiques (5, 12, 17, 20, 24, 29, 33), la fréquence propre du système vibrant comprenant le moteur à combustion interne (3) et la fondation (2) du moteur est inférieure d'au moins 10 % à la fréquence propre du système vibrant sans éléments élastiques.

2. Suspension selon la revendication 1, caractérisée en ce que le débattement maximum des éléments élastiques (5, 12, 17, 20, 24, 29, 33) sous le poids du moteur à combustion interne (3) est d'environ 0,1 à 0,15 mm par 100 t du poids du moteur à combustion interne (3).

3. Suspension selon la revendication 1, caractérisée en ce qu'après la mise en place des éléments élastiques (5, 12, 17, 20, 24, 29, 33), la fréquence propre du système vibrant comprenant le moteur à combustion interne (3) et la fondation (2) du moteur est inférieure de 20 à 30 % à la fréquence propre du système vibrant sans les éléments élastiques.

4. Suspension selon une des revendications précédentes, caractérisée en ce que l'élément élastique (5) présente une plaque (6) qui peut être boulonnée en son milieu à une bride de portée (4) du moteur à combustion interne (3) et dont le soutien est réalisé au moyen de nervures (9) prévues le long des bords, qui peuvent être boulonnées sur la fondation (2) du moteur.

5. Suspension selon une des revendications précédentes, caractérisée en ce que les éléments élastiques (12) présentent une plaque (13) continue dans la direction longitudinale du moteur, qui est munie de protubérances (14) déportées les unes par rapport aux autres, pour donner appui à la bride de portée (4) du moteur à combustion interne (3), et des nervures (15) pour porter sur la fondation (2) du moteur.

6. Suspension selon une des revendications précédentes, caractérisée en ce que les éléments élastiques (17) présentent une section en forme de U et une branche est appliquée contre la fondation (2) du moteur et une contre la bride de portée (4).

7. Suspension selon une des revendications précédentes, caractérisée en ce que les éléments élastiques (20, 24, 29) sont constitués par une plaque en porte-à-faux latéral, qui est en appui contre la bride de portée (4) sur un côté et contre la fondation (2) du moteur sur l'autre côté.

8. Suspension selon une des revendications précédentes, caractérisée en ce que les éléments élastiques (33) présentent une cavité (38) qui est limitée par une plaque supérieure et une plaque inférieure (34, 35) et par des protubérances latérales (36, 37).
